# EUROPEAN PATENT APPLICATION

(11) **EP 1 802 103 A2**
(43) Date of publication of application: **27.06.2007**
(21) Application number: 06125989.1
(22) Date of filing: 13.12.2006
(51) Int. Cl.: H04N 5/225

(54) **Protection case for telecameras**

(30) Priority: 20.12.2005 IT VI20050340
(71) Applicant: Tekno System S.p.A., 36010 Carre' VI (IT)
(72) Inventor: Bertollo Conte, Giovanni Battista, 36015 Schio (Vicenza) (IT)
(74) Representative: Coppo, Alessandro

(57) **Abstract**

A protection case (10) for telecameras, in particular for telecameras capable of transmitting a digital video signal through a computer network, of the type comprising at least one envelope, wherein the telecamera is positioned, equipped with at least one transparent element facing the recording lens of the telecamera and couplings (15) for the power supply, signal and/or network connections; according to the invention, special network connectors (16) are used, equipped with one seat or socket (17) adapted to Ethernet connections, which is mounted onto the case (10), such as to achieve a quick, easy and air-tight connection of an additional connector, such as a plug, for Ethernet connections, by operating exclusively outside the protection case (10).

## Description

The present invention refers to, in general, a protection case for telecameras.

More in particular, the invention regards a connection mode for telecameras usable for video monitoring (or CCTV, "closed circuit TV").

It is known that video monitoring installations, usually used for the control of building premises and the outdoor surroundings thereof, as well as for the control of industrial processes, use at least one telecamera, capable of filming the wanted area, so as to allow for its remote visualisation and/or registration, possibly on behalf of an operator.

Video monitoring telecameras normally require an external protection case against vandalism, dust and/or atmospheric agents, usually equipped with a transparent element for shooting and cable ducts for the passage of all necessary cables.

Until a few years ago, video monitoring was carried out by means of telecameras that outputted an analogue video signal; such video signal was channelled, from the observation point where the telecamera was located, through an appropriate coaxial cable connected to the rear couplings of the telecamera, to other peripherals for the visualisation, registration and/or management of the monitoring installation.

Moreover, in the last couple of years, so-called "network cameras" or "IP cameras" or, in other words, telecameras, have been available to the video monitoring market (CCTV), at the output of which there is no analogue video signal connection but an Ethernet-type network connection, which allow for a digital-format transmission of the video signal through a computer network.

When installing an IP telecamera, the problem of the network cable connection therefore occurs.

In fact, such cable is equipped with a connector, typical of Ethernet network connections, whose dimensions are excessive to be inserted through the cable duct normally provided with telecamera protection cases.

Moreover, if one tries to replace the cable duct with a larger size model, so as to insert the Ethernet connector, the cable duct's size turns out to be no longer capable of clamping hard enough the cable, therefore allowing for possible water and dust infiltrations inside the case.

The installer is therefore forced to insert the cable, without the Ethernet connector, through the cable duct, and to then wire the connector from the inside of the protection case.

Such uncomfortable operation is usually carried out with the case installed, in spots often difficult to reach and under conditions of precarious balance and scarce safety.

Therefore, the object of the present invention is to solve the above-mentioned drawbacks and, in particular, to make a protection case for telecameras, which allows for having an easily installable, convenient and safe Ethernet-type network connection.

Another object of the invention is to make a protection case for telecameras, which allows for quickly fixing the Ethernet-type network connector.

A further object of the invention is to make a protection case for telecameras, adapted to Ethernet connections, which turns out to be extremely reliable and of easy and cost-efficient manufacture.

These and other objects, according to the present invention, are achieved by making a protection case for telecameras, according to accompanying claim 1.

Other detail characteristics are described in the following claims.

Further characteristics and advantages of a protection case for telecameras, according to the present invention, will become more evident from the following description of an exemplifying and preferred, but not limiting, embodiment of the invention, and from the accompanying drawings, in which:

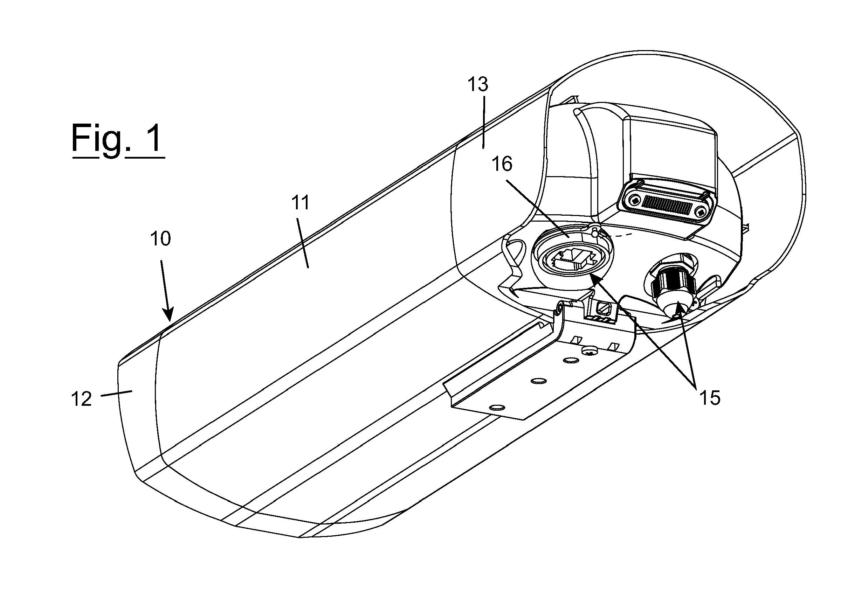

- figure 1 shows a perspective view of a possible embodiment of a protection case for telecameras, equipped with an Ethernet connector, according to the present invention;

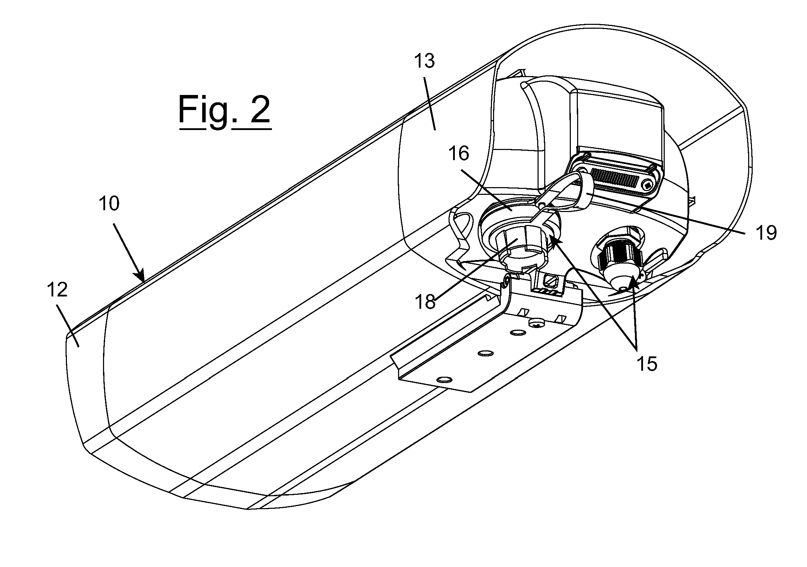

- figure 2 shows a perspective view of the protection case for telecameras of figure 1, equipped with an Ethernet connector and closing cap, according to the present invention;

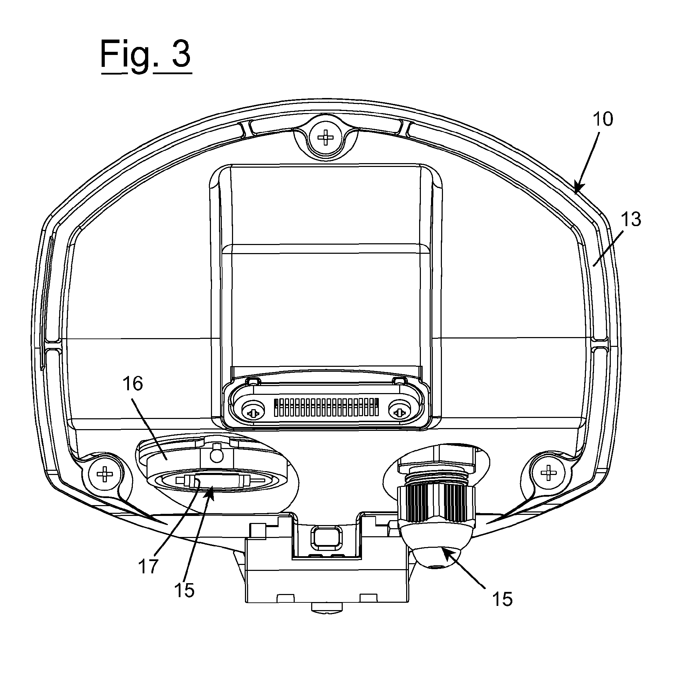

- figure 3 is a rear-front view of the protection case for telecameras of figure 1, according to the present invention;

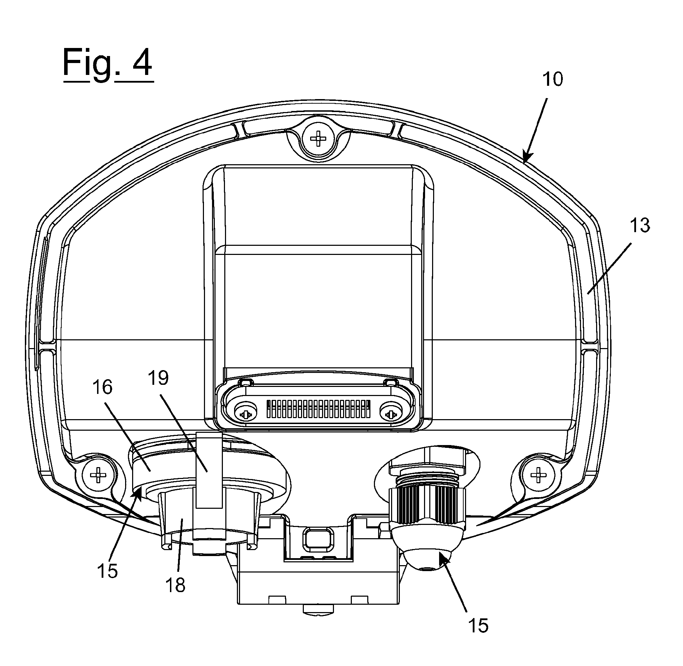

- figure 4 is a rear-front view of the protection case for telecameras of figure 2, according to the present invention;
- figure 5 shows an enlarged detail of the protection case for telecameras of figure 1, according to the present invention;
- figure 6 shows an enlarged detail of the protection case for telecameras of figure 2, according to the present invention.

Referring to the figures mentioned, 10 generically indicates a protection case for telecameras which, according to a typical and exemplifying, but not limiting, embodiment comprises a central body 11, of tubular shape and normally made of an aluminium extrusion, a front terminal portion 12, equipped with a transparent element (not visible in the accompanying figures), placed at the lens of the telecamera, and a rear terminal portion 13, usually equipped with couplings for the connection of electrical and/or network connection cables 15.

In alternative embodiments, the protection case 10 may also comprise at least two bodies, one hinged to another.

In particular, the invention concerns a protection case 10 for monitoring telecameras, the so-called "network cameras" or "IP cameras", or in other words telecameras for CCTV installations at the output of which there is an Ethernet-type network connection.

The protection case 10, according to the present invention, uses special connectors for the Ethernet network connection, which include at lease one connection socket (female) adapted to Ethernet connections.

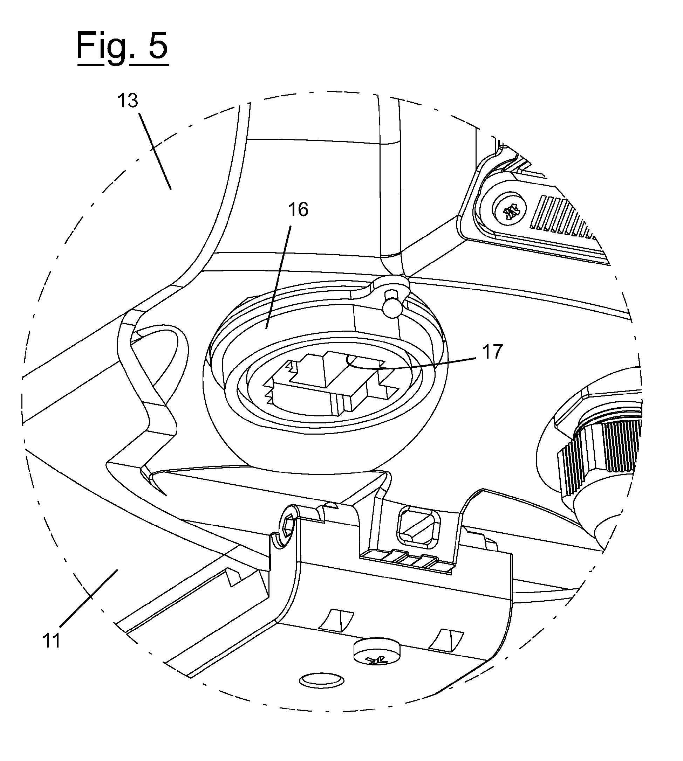

Such connector (indicated by 16 in the accompanying figures and shown in detail in figure 5) is fixed to the case 10 of the telecamera.

The particular type of connector 16 also allows for quickly and safely fixing a male connector (plug), capable of inserting inside the seat or socket 17, whose shape is typical of Ethernet-type network connections.

By using such type of connection, it will be enough for the installer to simply connect the male connector for Ethernet connections (not visible in the figures), by operating exclusively outside the protection case 10.

The advantage, on behalf of the installer, in terms of facility and rapidity of installation, as well as convenience and safety, turns out to be very significant.

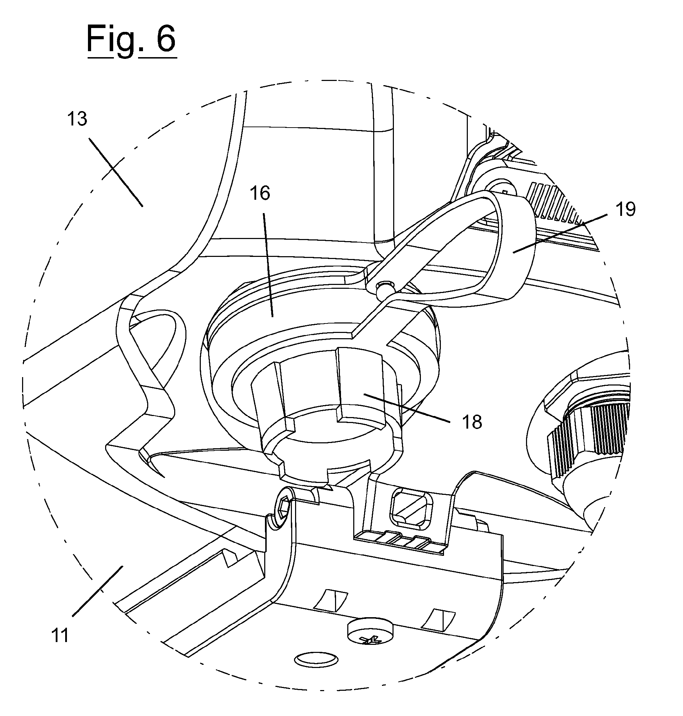

Lastly, in exemplifying and preferred, but not limiting, embodiments of the invention, it is possible to use an air-tight closing cap 18, visible in detail in accompanying figure 6, which may be equipped with a tab 19. The cap 18 is usable for closing the seat 17 in case the connector 16 is not used, in order to prevent accidental damage caused by the penetration of dust and/or other atmospheric agents inside the socket 17 and the case 10.

From the effected description, the characteristics of the protection case for telecameras, which is the object of the present invention, become clear as do the advantages.

Lastly, it is clear that numerous other variations may be applied to the protection case herein, without departing from the principles of novelty implied in the inventive idea, as it is clear that, in the practical implementation of the invention, the materials, forms and dimensions of the details depicted may be anything depending on the needs and these may be replaced with others technically equivalent.

## Claims

1. Protection case (10) for telecameras, in particular for telecameras capable of transmitting a digital video signal through a computer network, of the type comprising at least one envelope, equipped with at least one transparent element facing the recording lens of the telecamera and couplings (15) for cable connections, **characterised in that** at least one of said couplings (15) includes at least one respective network connector (16), equipped with at least one seat or socket (17) adapted to Ethernet connections, such as to achieve a quick and easy connection of a wired plug, for Ethernet connections, by operating exclusively outside the protection case (10).

2. Protection case (10) according to claim 1, usable in particular for monitoring telecameras, the so-called "network cameras" or "IP cameras", or in other words telecameras for closed circuit video monitoring installations, at the output of which there is at least one Ethernet-type network connection.

3. Protection case (10) according to claim 1, **characterised in that** it comprises at least two bodies, one hinged to another.

4. Protection case (10) according to claim 1, **characterised in that** it comprises at least one central body (11), at least one front terminal portion (12), at which said transparent element is located, and at least one rear terminal portion (13), at which said couplings (15) are made for cable connections.

5. Case (10) for telecameras according to claim 1, **characterised in that** said plug may be inserted into said socket (17), said socket (17) being typical of Ethernet-type network connections.

6. Case (10) for telecameras according to claim 5, **characterised in that** at least one closing element (18) of said socket (17) is usable, in order to prevent accidental damage to said connector (16) caused by the penetration of dust and/or other atmospheric agents.

7. Protection case (10) according to claim 6, **characterised in that** said closing element (18) is equipped with at least one tab (19).
